# DEMANDE DE BREVET EUROPEEN

(11) **EP 1 297 906 A1**
(43) Date de publication de la demande: **02.04.2003**
(21) Numéro de dépôt: 02292330.4
(22) Date de dépôt: 23.09.2002
(51) Int. Cl.: B08B 7/00, B29C 70/68, B29C 59/16

(54) **Procédé de fabrication d'un dispositif antivibratoire pour automobile comportant un insert métallique destiné à être adhérisé avec un élastomère**

(30) Priorité: 28.09.2001 FR 0112518
(71) Demandeur: HUTCHINSON, 75008 Paris (FR)
(72) Inventeur: Girard, André, 18500 Mehon dur Yevre (FR); Zarife, Victor, 45120 Cepoy (FR)
(74) Mandataire: Regi, François-Xavier (FR)

(57) **Abrégé**

Procédé de fabrication d'un dispositif antivibratoire pour automobile comportant au moins un insert (5) métallique qui comprend lui même au moins une surface de fixation (6) adhérisée avec un élastomère (13), ce procédé comportant une étape de nettoyage au cours de laquelle on balaye la surface de fixation avec un faisceau laser (8) suffisamment puissant pour éliminer les impuretés présentes sur cette surface.

## Description

La présente invention est relative aux procédés de fabrication d'un dispositif antivibratoire pour automobile comportant au moins un insert métallique destiné à être adhérisé avec un élastomère.

Par "insert métallique", on entend ici toute pièce réalisée en métal et destinée à être adhérisée avec l'élastomère, que cette pièce soit destinée à être noyée ou non dans l'élastomère.

Plus particulièrement, l'invention concerne un procédé de fabrication d'un dispositif antivibratoire pour automobile comportant au moins un insert métallique qui comprend lui même au moins une surface de fixation adhérisée avec un élastomère(par exemple, du caoutchouc), ce procédé comportant les étapes suivantes :
- une étape de nettoyage de la surface de fixation,
- une étape d'enduction au cours de laquelle on recouvre la surface de fixation avec au moins une couche de matériau de fixation destiné à réaliser (seul ou en combinaison avec une couche d'adhésif secondaire) une liaison entre l'insert et l'élastomère, ce matériau étant à base de caoutchouc, et
- une étape de moulage de l'élastomère sur l'insert.

Au cours de l'étape d'enduction, on peut déposer notamment :
- un adhésif primaire d'activation qui est ultérieurement recouvert par un adhésif secondaire, lequel adhésif secondaire réagit ensuite avec l'élastomère au cours de la vulcanisation de cet élastomère,
- ou directement, un adhésif réagissant seul avec l'élastomère au cours de la vulcanisation de cet élastomère (il s'agit alors de l'adhésif qualifié de "secondaire" à l'alinéa ci-dessus).

Dans les procédés connus de ce type, l'étape de nettoyage consiste notamment à plonger l'insert métallique dans des bains de dégraissage successifs, qui nécessitent des infrastructures lourdes et coûteuses et qui contiennent des produits dangereux et polluants.

La présente invention a notamment pour but de pallier ces inconvénients.

A cet effet, selon l'invention, un procédé du genre en question est caractérisé en ce que l'étape de nettoyage est réalisée à sec et comprend un traitement au laser consistant à balayer la surface de fixation avec un faisceau laser suffisamment puissant pour éliminer les impuretés présentes sur ladite surface de fixation.

Grâce à ces dispositions, on évite d'avoir recours à des bains de dégraissage pour nettoyer la surface de l'insert, ce qui rend le procédé de traitement plus simple, moins coûteux et moins dangereux pour l'environnement. De plus, on constate que le traitement au laser facilite en outre l'adhérisation ultérieure de l'insert avec l'élastomère. Le fait que le matériau de fixation est à base de caoutchouc facilite également l'adhérisation avec l'élastomère.

Dans des modes de réalisation préférés de l'invention, on peut éventuellement avoir recours en outre à l'une et/ou à l'autre des dispositions suivantes :
- au cours de l'étape de nettoyage, on délivre à la surface de fixation, au moyen du faisceau laser, une énergie surfacique moyenne comprise entre 0,5 et 20 J/cm² ;
- on utilise un laser à impulsions ;
- le balayage de la surface de fixation par le faisceau laser a lieu avec une vitesse de traitement d'au moins 2 cm²/s ;
- on utilise un laser choisi parmi les lasers excimères émettant dans l'ultraviolet et les lasers YAG émettant dans l'infrarouge
- l'insert est en acier ;
- au cours de l'étape de nettoyage, on délivre à la surface de fixation de l'insert métallique, au moyen du faisceau laser, une énergie suffisante pour éliminer toute trace de corrosion sur ladite surface de fixation ;
- l'étape de nettoyage est suivie par une étape de passivation ;
- l'étape de nettoyage est suivie directement par l'étape d'enduction ;
- l'étape d'enduction est mise en oeuvre suffisamment rapidement après l'étape de nettoyage pour éviter une réapparition de toute trace de corrosion sur la surface de fixation ;
- l'étape d'enduction est mise en oeuvre moins de 24 heures après la fin de l'étape de nettoyage ;
- au cours de l'étape de nettoyage, on délivre à la surface de fixation, au moyen du faisceau laser, une énergie suffisante pour attaquer légèrement ladite surface de fixation : dans tous les cas, on facilite ainsi l'adhésion ultérieure entre l'insert et l'élastomère ; de plus, on évite ainsi une étape ultérieure de grenaillage qui est habituellement prévue entre l'étape de nettoyage et une étape de protection anticorrosion ; et
- l'élastomère est du caoutchouc.

D'autres caractéristiques et avantages de l'invention apparaîtront au cours de la description suivante d'une de ses formes de réalisation, donnée à titre d'exemple non limitatif, en regard des dessins joints.

Sur les dessins :
- la figure 1 est une vue schématique de côté d'un support antivibratoire réalisé grâce au procédé selon l'invention ;
- la figure 2 est une vue schématique d'un exemple d'installation permettant de mettre en oeuvre un procédé selon une forme de réalisation de l'invention ; et
- et la figure 3 est une vue en coupe d'une partie d'une pièce réalisée en utilisant le procédé selon l'invention, avant vulcanisation.

Sur les différentes figures, les mêmes références désignent des éléments identiques ou similaires.

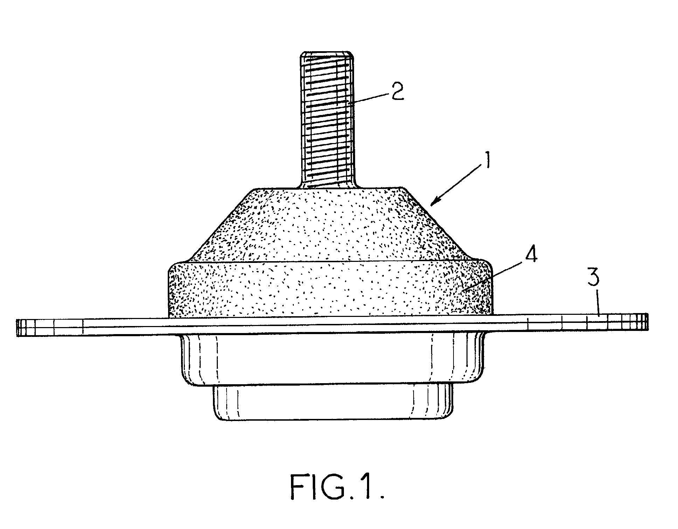

La figure 1 montre un support antivibratoire 1 réalisé par le procédé selon l'invention. Ce support comporte :
- un goujon métallique 2 solidaire d'une embase métallique rigide,
- un anneau métallique rigide 3,
- un corps en élastomère 4 qui relie de façon étanche l'embase du goujon 2 à l'anneau 3 en étant adhérisé à ces deux pièces.

L'embase du goujon 2 ou l'anneau 3 constitue ce que l'on a nommé un insert métallique 5. Cet insert métallique 5 est, par exemple, en acier. Il comporte une surface de fixation 6 destinée à être adhérisée à la masse d'élastomère du corps 4.

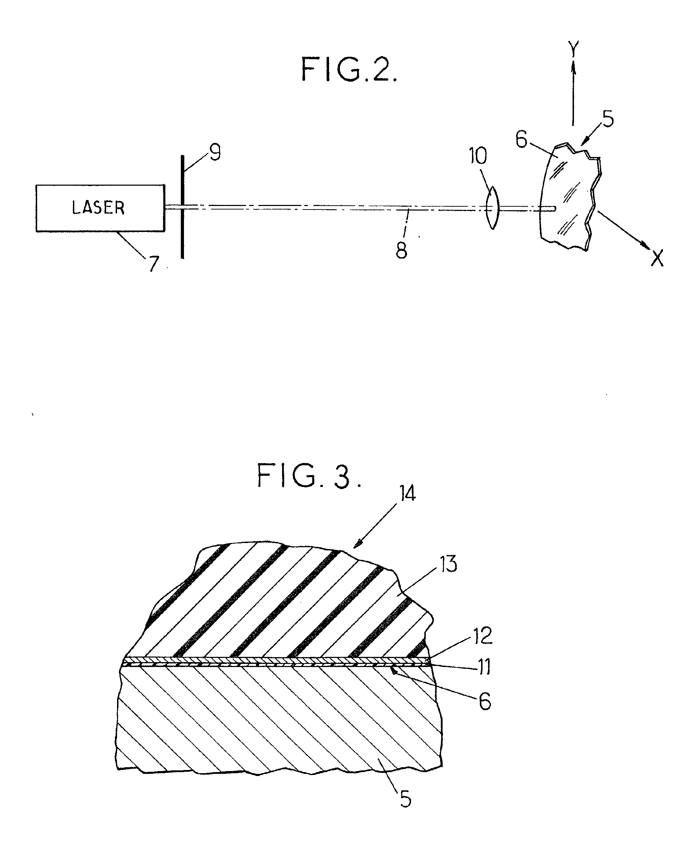

Comme représenté sur la figure 2, avant cette adhérisation, la surface de fixation 6 est soumise à un traitement préliminaire de nettoyage au laser, en utilisant par exemple un laser à impulsions 7 émettant un faisceau laser 8 qui atteint la surface de fixation 6 à nettoyer en traversant par exemple un masque 9 et une ou plusieurs lentilles 10.

A titre d'exemple non limitatif, on peut utiliser un laser excimère émettant dans l'ultraviolet, notamment un laser XeCl à impulsions émettant à la longueur d'onde de 308 nm, fonctionnant avec une fréquence de répétition de 250 Hz, et fournissant une énergie de 350 mJ par impulsion, le faisceau laser pouvant par exemple former une tache lumineuse de 5 à 6 mm² sur la surface de fixation 6.

En variante, on pourrait éventuellement utiliser également un laser YAG à impulsions émettant dans l'infrarouge.

Afin de nettoyer la surface de fixation 6, on crée un mouvement relatif entre le faisceau 8 et l'insert 5 selon deux directions X, Y perpendiculaires au faisceau laser 8, de façon que ce faisceau balaye l'ensemble de la surface de fixation 6. Bien entendu, ce mouvement relatif peut être obtenu aussi bien par déplacement de l'insert 5 que par déplacement du faisceau laser 8. La vitesse de traitement de la surface de fixation 6 peut être avantageusement supérieure à 2 cm²/s, par exemple d'environ 4 cm²/s.

On peut délivrer à la surface de fixation 6, au moyen du faisceau laser 8, des énergies surfaciques moyenne allant de 0,5 à 20 J/cm², par exemple comprises entre 2 et 15 J/cm², notamment entre 5 et 10 J/cm².

Avantageusement, l'énergie surfacique moyenne délivrée à la surface de fixation 6 par le faisceau laser 8 est suffisante :
- pour éliminer les impuretés présentes sur la surface de fixation 6 (notamment huile et graisse),
- pour éliminer toute trace de corrosion sur ladite surface de fixation 6, ce qui permet d'éviter un traitement ultérieur anticorrosion,
- et pour attaquer légèrement la surface de fixation 6, ce qui permet d'éviter un traitement ultérieur par grenaillage ou similaire.

De préférence, le nettoyage de la surface de fixation 6 par laser est suivi rapidement (sans traitement anticorrosion), par exemple sous 24 heures lorsque l'insert 5 est laissé à l'atmosphère ambiante, par une étape d'enduction au cours de laquelle on recouvre la surface de fixation 6 avec au moins une couche de matériau de fixation destiné à réaliser une liaison entre l'insert et l'élastomère.

Eventuellement, il serait possible de procéder à un traitement de passivation de l'insert 5, par exemple par trempage dans un bain de passivant connu tel que celui commercialisé sous la marque "PARCOLENE 1" ou celui commercialisé sous la marque "GARDOLENE D6870" par la société CHEMETAL, Clichy, France (produits fabriqués par la société PARKER, USA).

Comme représenté sur la figure 3, dans l'exemple considéré, cette étape d'enduction peut consister à revêtir la surface de fixation 6 avec une couche primaire d'adhésif d'activation 11 à base de caoutchouc.

A titre d'exemple non limitatif, on peut utiliser à titre de couche primaire le produit commercialisé sous la marque "THIXON P11 DV1" par la société MORTON, Semoy, FRANCE.

Après cette étape d'enduction par la couche primaire 11, la surface de fixation 6 est protégée contre la corrosion, de sorte que l'insert 5 peut rester stocké sans dommage jusqu'à l'adhérisation finale avec l'élastomère : on recouvre alors la couche primaire 11 par une couche d'adhésif secondaire 12 également à base de caoutchouc (par exemple réalisée avec le produit commercialisé sous la marque "THIXON 520" par la société MORTON, Semoy, France), puis on surmoule du caoutchouc cru 13 ou un autre élastomère sur la couche secondaire 12 avant de cuire l'ensemble pour réaliser une vulcanisation. On notera que la couche d'adhésif secondaire 12 peut également être déposée immédiatement après la couche primaire.

La pièce d'élastomère 14 ainsi obtenue présente une excellente résistance mécanique et notamment une excellente résistance au pelage à l'interface entre l'élastomère 13 et l'insert 5, comme l'ont confirmé des essais réalisés à l'état neuf ou après vieillissement à l'eau bouillante ou sous brouillard salin.

On notera que l'invention est également applicable aux inserts métalliques autres que ceux en acier, par exemple ceux réalisés en alliage léger.

## Revendications

1. Procédé de fabrication d'un dispositif antivibratoire pour automobile comportant au moins un insert (5) métallique qui comprend lui même au moins une surface de fixation (6) adhérisée avec un élastomère (13), ce procédé comportant les étapes suivantes :
- une étape de nettoyage de la surface de fixation (6),
- une étape d'enduction au cours de laquelle on recouvre la surface de fixation avec au moins une couche de matériau de fixation (11) destiné à réaliser une liaison entre l'insert et l'élastomère, ce matériau étant à base de caoutchouc, et
- une étape de moulage de l'élastomère (13) sur l'insert (5)
**caractérisé en ce que** l'étape de nettoyage est réalisée à sec et comprend un traitement au laser consistant à balayer la surface de fixation avec un faisceau laser (8) suffisamment puissant pour éliminer les impuretés présentes sur ladite surface de fixation.

2. Procédé selon la revendication 1, dans lequel au cours de l'étape de nettoyage, on délivre à la surface de fixation (6), au moyen du faisceau laser (8), une énergie surfacique moyenne comprise entre 0,5 et 20 J/cm².

3. Procédé selon la revendication 1 ou la revendication 2, dans lequel on utilise un laser à impulsions (7).

4. Procédé selon l'une des revendications précédentes, dans lequel le balayage de la surface de fixation (6) par le faisceau laser (8) a lieu avec une vitesse de traitement d'au moins 2 cm²/s.

5. Procédé selon l'une des revendications précédentes, dans lequel on utilise un laser choisi parmi les lasers excimères émettant dans l'ultraviolet et les lasers YAG émettant dans l'infrarouge.

6. Procédé selon l'une des revendications précédentes, dans lequel l'insert (5) est en acier.

7. Procédé selon l'une des revendications précédentes, dans lequel au cours de l'étape de nettoyage, on délivre à la surface de fixation (6) de l'insert métallique, au moyen du faisceau laser (8), une énergie suffisante pour éliminer toute trace de corrosion sur ladite surface de fixation.

8. Procédé selon l'une des revendications précédentes, dans lequel l'étape de nettoyage est suivie par une étape de passivation.

9. Procédé selon l'une des revendications 1 à 7, dans lequel l'étape de nettoyage est suivie directement par l'étape d'enduction.

10. Procédé selon la revendication 9, dans lequel l'étape d'enduction est mise en oeuvre suffisamment rapidement après l'étape de nettoyage pour éviter une réapparition de toute trace de corrosion sur la surface de fixation.

11. Procédé selon la revendication 10, dans lequel l'étape d'enduction est mise en oeuvre moins de 24 heures après la fin de l'étape de nettoyage.

12. Procédé selon l'une des revendications précédentes, dans lequel au cours de l'étape de nettoyage, on délivre à la surface de fixation, au moyen du faisceau laser (8), une énergie suffisante pour attaquer légèrement ladite surface de fixation (6).

13. Procédé selon l'une des revendications précédentes, dans lequel l'élastomère (13) est du caoutchouc.
